# EUROPEAN PATENT APPLICATION

(11) **EP 1 213 926 A2**
(43) Date of publication of application: **12.06.2002**
(21) Application number: 01129005.3
(22) Date of filing: 06.12.2001
(51) Int. Cl.: H04N 7/24, H04N 5/00, H04N 7/173

(54) **Data reproduction method, data receiving terminal and data receiving method**

(30) Priority: 07.12.2000 JP 2000372629; 22.01.2001 JP 2001012779; 01.03.2001 JP 2001057480
(71) Applicant: MATSUSHITA ELECTRIC INDUSTRIAL CO., LTD., Kadoma-shi, Osaka 571-8501 (JP)
(72) Inventor: Itoh, Tomoaki, Hirakata-shi, Osaka 573-0165 (JP); Yamaguchi, Takao, Tokyo 194-0041 (JP); Sato, Junichi, Nara-shi, Nara 631-0801 (JP); Arakawa, Hiroshi, Kyoto-shi, Kyoto 612-8136 (JP); Notoya, Yoji, Neyagawa-shi, Osaka 572-0055 (JP); Matsui, Yoshinori, Ikoma-shi, Nara 630-0212 (JP)
(74) Representative: Grünecker, Kinkeldey, Stockmair & Schwanhäusser Anwaltssozietät

(57) **Abstract**

In a data receiving terminal, a time stamp of the data whose reproduction has been terminated is stored in a memory when receiving/reproducing certain content, and when this certain content is reconnected to, a sending device (server) is requested to send data from the time stamp stored in the memory.

## Description

### BACKGROUND OF THE INVENTION

The present invention relates to a reproduction method for AV (audio/video) data that can adapt to changes in the available bandwidth, transmission errors and obstacles or the like, as well as a data receiving terminal and a data receiving method for receiving and reproducing AV data that has been sent from a server.

In the course of recent advances in video encoding techniques, such as MPEG (Moving Picture Experts Group) -4, AV distribution services on mobile wireless terminals, such as mobile phones, have been initiated, and it is likely that such AV distribution services will become widespread in the near future.

At present, there are mainly two types of data transmission for AV distribution: download reproduction by HTTP/TCP/IP (Hyper-Text Transfer Protocol/Transmission Control Protocol/Internet Protocol) and streaming reproduction by RTP/UDP/IP (Realtime Transport Protocol/User Datagram Protocol/Internet Protocol). In control sections for streaming reproduction, a protocol called RTSP (Real Time Streaming Protocol) is used for example (see H. Schulzrinne et al., "Real Time Streaming Protocol", RFC 2326, Internet Engineering Taskforce, Apr. 1998).

The download reproduction by HTTP/TCP/IP uses the same data transmission protocol as for browsing web pages on the internet, so that on the one hand it is very easy to realize, but since data are resent when transmission errors occur, it is not well suited for real-time reproduction of AV data for which a real-time approach is desired. By contrast, in streaming reproduction with RTP/UDP/IP, no data are resent in the case of transmission errors, and therefore there is no guarantee that the data are transmitted accurately, but this system is suitable for the real-time reproduction of AV data for which a real-time approach is necessary.

Also, in download reproduction with HTTP/TCP/IP, the data that have been received are ordinarily stored in the memory of the terminal even after reproduction, so that due to memory restrictions, it is not possible to distribute very long-playing content. By contrast, in streaming reproduction with RTP/UDP/IP, the data are ordinarily discarded after reproduction, so that the distributed content is subject to few restrictions regarding time, and the receiving and reproduction of long-playing content is possible.

In streaming reproduction with conventional RTP/UDP/IP, when the transmission path is interrupted, or when the power source of the terminal has inadvertently been disconnected, or when the AV reproduction is interrupted by another application, it was not easy to resume the reproduction of AV data after restoring the connection. More specifically, if the connection to the server is interrupted during the data reproduction of a certain content, it is not possible to specify the moment when the connection has been interrupted, so that if once the connection to the same content has been reestablished, it was necessary to receive/reproduce the data from the beginning. For this reason, there was the problem that a user could not consume a certain content divided into several parts and at different times or places, which was particularly inconvenient when consuming long-playing content.

Also, mobile wireless devices, such as mobile telephones, have the feature that they can be used while the user moves around, but when the user moves into a region that is not reached by the radio waves (outside the service area), such as a tunnel, there is the risk that the data cannot be received over a long period of time. In this case, the data that have been sent during the region outside the service area are not resent in the case of streaming reproduction with RTP/UDP/IP, so that there is the problem that the data are lost and cannot be consumed.

### SUMMARY OF THE INVENTION

In view of these problems, it is an object of the present invention to present a data reproduction method, a data receiving terminal and a data receiving method for a streaming reproduction, in which reproduction can be resumed from an intermediate position of a data stream,

In order to achieve this object with the present invention, time information regarding a time when the reproduction of the data stream is interrupted is held, and the reproduction is resumed from an intermediate position of the data stream based on this time information.

With the present invention, the current reproduction time is held by the data receiving terminal or the sending terminal (server), and if the receiving buffer of the data receiving terminal becomes empty, if the transmission path is interrupted due to an obstacle or the like, if the power source of either of the terminals is disconnected, or if an interrupt is generated by another application (e.g. internet telephone), then the AV reproduction is temporarily stopped. Then, when the transmission path is reopened, or the power source of the devices is turned on again, or if the interrupt by the other application has been resolved, the buffering of the data is started automatically starting from the reproduction time when the buffer has become empty, when the transmission path was interrupted, when the power source of the terminals was cut off, or when the interrupt by the other application was generated, and then those data are reproduced, thus making it possible to realize an AV transmission that is resistant to obstacles. More specifically, a reproduction time **t1** is stored by the data receiving terminal (if necessary, application name, reproduction content name and user name etc. can be stored as well), and if the transmission path is temporarily interrupted, a request is sent by the data receiving terminal to the sending terminal (server) such that the reproduction is carried out starting at the reproduction time **t1** when the transmission path is opened again.

For example, a time stamp of the data when reproduction was performed is stored in the data receiving terminal, and even if the connection to the server has been interrupted by the user or due to a worsening of the receiving situation, it is possible to reproduce starting with a continuation of the data that were reproduced during the previous connection.

### BRIEF DESCRIPTION OF THE DRAWINGS

Fig. **1** is a block diagram showing an example of the configuration of a data receiving terminal in accordance with a first embodiment of the present invention.
Fig. **2** illustrates RTP packets that are sent by RTP/UDP/IP transmission from the sending device in Fig. **1**.
Fig. **3** shows an example of the memory structure in the receiving buffer in Fig. **1**.
Fig. **4** shows an example of the storage content of the memory in Fig. **1**.
Fig. **5** is a flowchart illustrating an example of the operation of the memory management unit in Fig. **1**.
Fig. **6** is a flowchart illustrating an example of the operation of the connection request creation unit in Fig. **1.**
Fig. **7** is a block diagram showing an example of the configuration of a data receiving terminal in accordance with a second embodiment of the present invention.

### DETAILED DESCRIPTION OF THE INVENTION

Referring to the accompanying drawings, the following is a description of a data receiving terminal in accordance with an embodiment of the present invention.

### First Embodiment

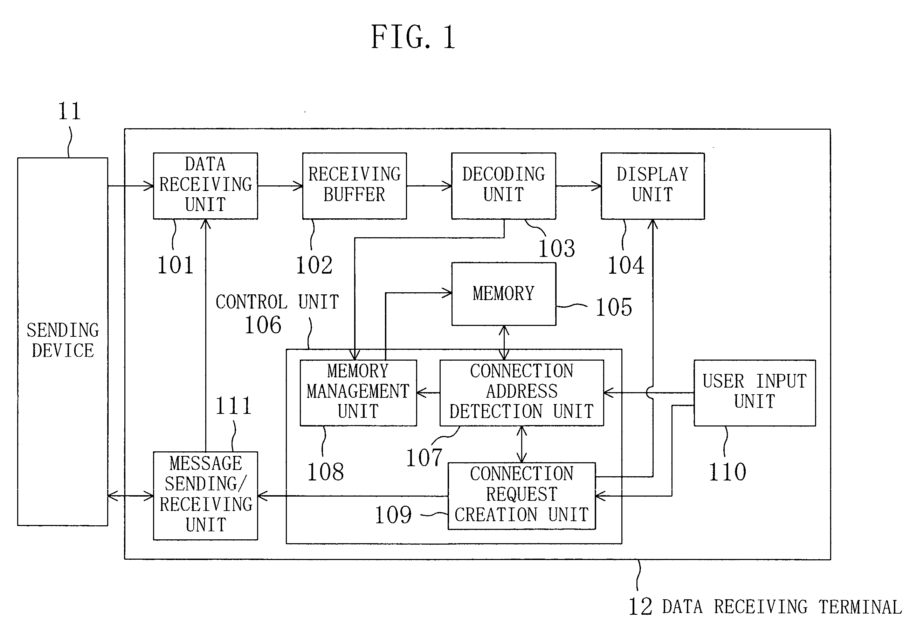

Fig. **1** is a block diagram showing an example of the configuration of a data receiving terminal in accordance with the first embodiment of the present invention. In Fig. **1**, the data receiving terminal **12** according to the present invention receives and reproduces RTP packets that have been sent by RTP/UDP/IP transmission from a sending device (server) **11**. The data receiving terminal **12** includes a data receiving unit **101**, a receiving buffer **102**, a decoding unit **103,** a display unit **104,** a memory **105,** a control unit **106,** a user input unit **110** and a message sending/receiving unit **111.** The control unit **106** includes a connection address detection unit **107**, a memory management unit **108** and a connection request creation unit **109**.

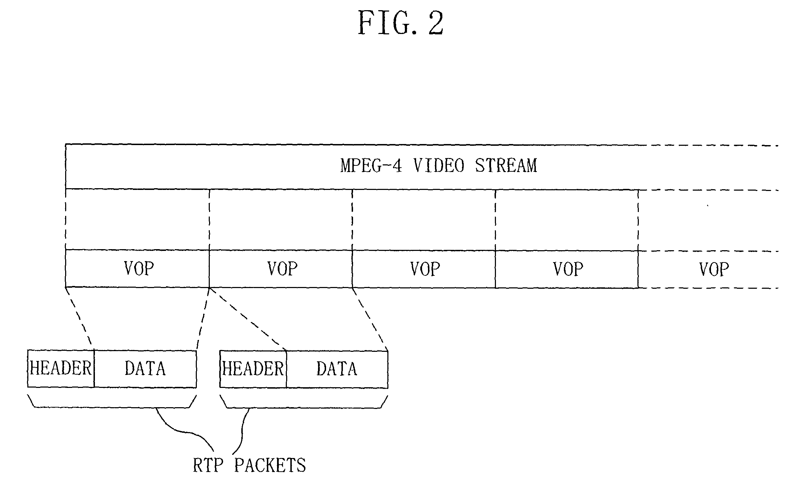

Fig. **2** illustrates RTP packets that are sent by RTP/UDP/IP transmission from the sending device **11**. As shown in Fig. **2**, RTP packets are made of a header portion and a data portion. The header portion includes time information, such as the reproduction time. The data portions store an MPEG 4 video stream. For example, one frame of the video stream is stored in the data portion of an RTP packet. In MPEG-4, this unit (one frame) is called "VOP" (Video Object Plane). In the following explanations, it is assumed that one VOP data set is sent per RTP packet.

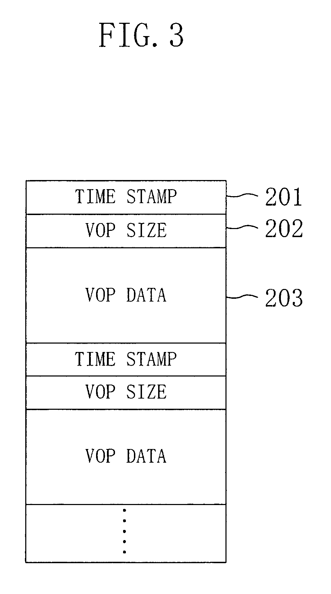

Fig. **3** shows an example of the memory structure of the receiving buffer **102**. The data receiving unit **101** receives RTP packets that have been sent from the server, calculates the VOP size, and stores the time stamps indicating the reproduction order of the received VOP data as well as the VOP data itself together with the calculated VOP size in the receiving buffer **102.** As shown in Fig. **3,** the receiving buffer **102** stores the time stamp **201,** the VOP size **202** and the VOP data **203** together as a group. The decoding unit **103** decodes the VOP data stored in the receiving buffer **102** following the time stamps associated with the VOP data, and outputs the decoded VOP data to the display unit **104.** If the decoded data is I-VOP (intra-coded VOP), the time stamp of this I-VOP is outputted to the memory management unit **108**. The display unit **104** displays the inputted data on the display screen.

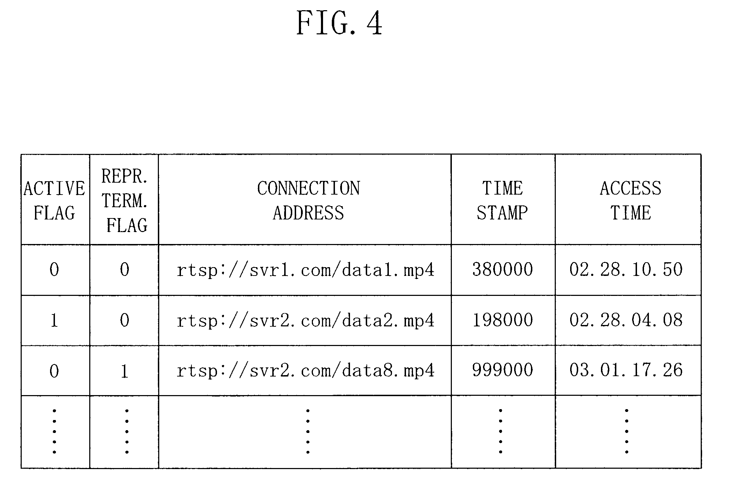

Fig. **4** shows an example of the storage content in the memory **105**. As shown in Fig. **4**, the memory **105** stores a plurality of entries grouping together an active flag indicating the content currently being received, a reproduction termination flag indicating the content that has been reproduced to the end, a connection address indicating the address of the sending device to which the data receiving terminal **12** is connected, a time stamp indicating the position at which the reproduction of the content shown at the connection address is terminated, and the access time indicating the time when the content was accessed. In this embodiment, the active flag is "1" for content that is currently being received, and "0" otherwise. The reproduction termination flag is "1" for content that has been reproduced to the end, and "0" otherwise.

The control unit **106**, which controls the entire data receiving terminal **12**, manages the memory **105** and requests connection to the server. To be more specific, the connection address detection unit **107** detects whether an entry regarding the connection address that has been outputted from the user input unit **110** is registered in the memory **105.** If an entry regarding the connection address is registered, and if there is a request for detection of the time stamp of this entry from the connection request creation unit **109**, it detects the time stamp of this entry. The memory management unit **108** manages the memory **105**, and when a new entry is created, and a time stamp is outputted from the decoding unit **103**, the memory management unit **108** replaces the time stamp in the memory **105** corresponding to the connected device from which data are currently being received with the time stamp outputted from the decoding unit **103**. The connection request creation unit **109** creates a request for connection to a server, based on a user command that is entered into the user input unit **110,** and the information stored in the memory **105.**

The user input unit **110** is for example a button or a touch panel, and analyzes an external input such as a selection or pushing down by the user, and outputs the result of this analysis to the control unit **106.** The message sending/receiving unit **111** sends the connection request that has been created with the connection request creation unit **109** to the server, and processes the response from the server.

The following is a more specific explanation of the operation of the data receiving terminal **12** according to the present invention. When the user inputs a connection address of desired content into the user input unit **110,** or when the user selects a region on which a link is placed that leads to video data from a contents scene displayed by the display unit **104,** the connection address is outputted from the user input unit **110** to the connection address detection unit **107.** When the connection address is output from the user input unit **110,** the connection address detection unit **107** searches whether an entry for the connection address outputted from the user input unit **110** is registered in the memory **105**, and outputs the detection result to the memory management unit **108** and the connection request creation unit **109**.

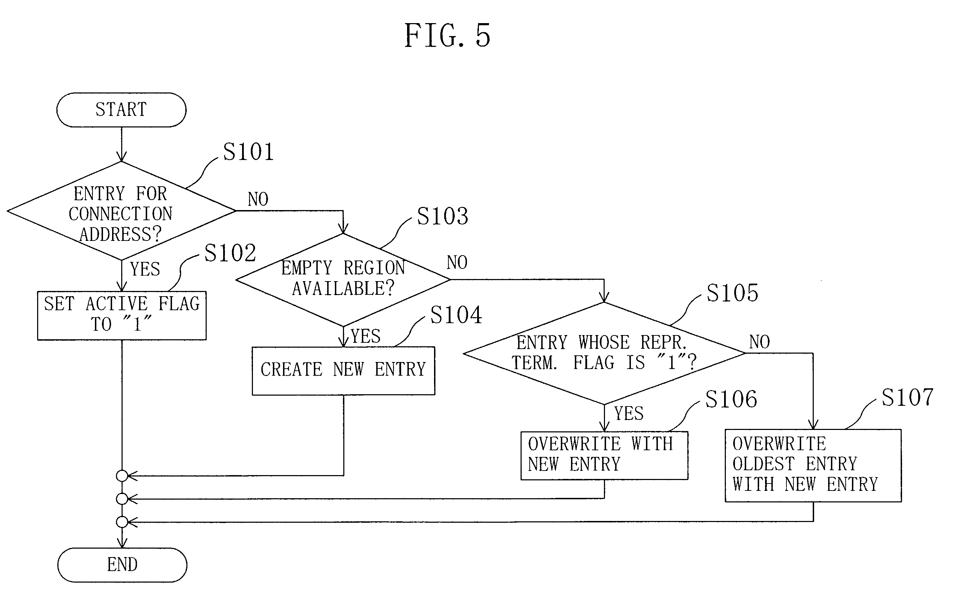

Fig. **5** is a flowchart illustrating an example of the operation of the memory management unit **108** when it has received the detection result from the connection address detection unit **107**. The memory management unit **108** receives the detection result from the connection address detection unit **107** and performs the following operation: First, the memory management unit **108** receives the detection result from the connection address detection unit **107** in Step **S101,** and if an entry for the connection address is registered, the procedure advances to Step **S102,** whereas if no entry for the connection address is registered, the procedure advances to Step **S103**. If an entry for the connection address is registered, the memory management unit **108** sets the active flag of the entry registered in the memory **105** to "1" (Step **S102**). On the other hand, if no entry for the connection address is registered, the memory management unit **108** searches at Step **S103** whether there is an empty region in the memory **105**, and if there is an empty region in the memory, the procedure advances to Step **S104,** whereas if there is no empty region in the memory, the procedure advances to Step **S105.** If there is an empty region in the memory, a new entry is created in this empty region (Step **S104**). The creation of this new entry by the memory management unit **108** is performed by setting the connection address to the connection address specified by the user input unit **110,** and setting the active flag to "1", the reproduction termination flag to "0", and the time stamp to "0". On the other hand, if there is no empty region in the memory, the memory management unit **108** searches at Step **S105** whether there is an entry in the memory **105** whose reproduction termination flag is "1". If there is an entry whose reproduction termination flag is "1", then the procedure advances to Step **S106,** and if there is no entry whose reproduction termination flag is "1", then the procedure advances to Step **S107.** If there is an entry whose reproduction termination flag is "1", then the entry whose reproduction termination flag is "1" is overwritten with the new entry (Step **S106**). If there are a plurality of entries whose reproduction termination flag is "1", then the entry with the oldest access time is selected, and this selected entry is overwritten with the new entry. If, on the other hand, there is no entry whose reproduction termination flag is "1", then the registered entry with the oldest access time is selected, and this selected entry is overwritten with the new entry (Step **S107**).

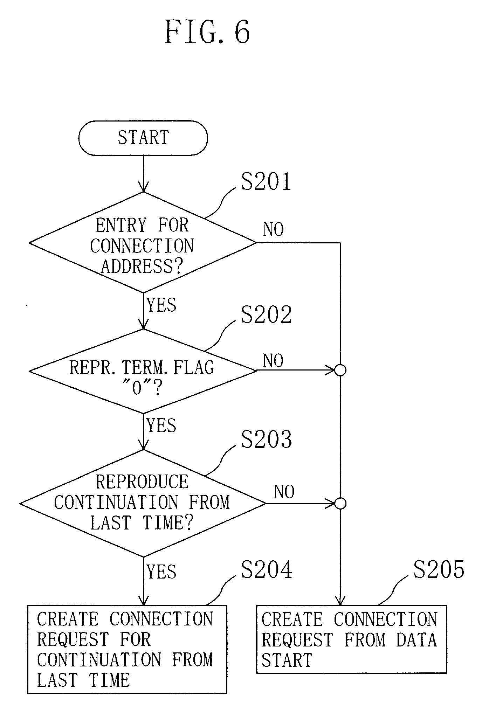

Fig. **6** is a flowchart illustrating an example of the operation of the connection request creation unit **109**, when it has received the detection result from the connection address detection unit **107**. The connection request creation unit **109** receives the detection result from the connection address detection unit **107**, and performs the following operation: First, the connection request creation unit **109** receives the detection result from the connection address detection unit **107** in Step **S201**, and if an entry for the connection address is registered, the procedure advances to Step **S202,** whereas if no entry for the connection address is registered, the procedure advances to Step **S203.** If an entry for the connection address is registered, the connection request creation unit **109** looks up the reproduction termination flag of this entry, and detects whether the reproduction termination flag is "0" (Step **S202**). If the reproduction termination flag is "0", then the procedure advances to Step **S203,** and if the reproduction termination flag is not "0", then the procedure advances to Step **S205.** If the reproduction termination flag is "0", then the previous reproduction has been terminated before it was finished, so that the connection request creation unit **109** outputs to the display unit **104** a signal indicating that a message is to be displayed requesting to decide whether to receive starting with a continuation of the previous reproduction, and this message is then displayed (Step **S203**). Then, if a selection signal selecting that the data should be received starting with a continuation of the previous reproduction is outputted from the user input unit **110,** the connection request creation unit **109** detects the time stamp of the corresponding entry via the connection address detection unit **107**, the receiving of the data should be requested starting with a continuation of the previous reproduction of the contents shown by the connection address, a connection request is created with a receiving start position that is shown by the time stamp, and this connection request is outputted to the sending/receiving unit **111** (Step **S204**). On the other hand, if a selection signal selecting that the data is not to be received starting with a continuation of the previous reproduction is outputted from the user input unit **110,** or if no entry for the connection address is registered, or if the reproduction termination flag of the entry for the registered connection address is not "0", then the data should be received starting with the beginning of the content shown by the connection address, and the connection request creation unit **109** creates a connection request not indicating a reception start position, which is outputted to the message sending/receiving unit **111** (Step **S205**).

Now, when the message sending/receiving unit **111** has received the connection request from the connection request creation unit **109**, it sends the connection request created by the connection request creation unit **109** as an RTSP SETUP message to the server. Then, when it has received an OK response from the server, it sends a PLAY message to the server. Moreover, when the message sending/receiving unit **111** receives an OK response regarding the PLAY message from the server, it opens the data receiving unit **101,** so that data can be received. On the other hand, if the message sending/receiving unit **111** cannot receive an OK response from the server, it is judged that connection is impossible, and the user is notified of the fact that connection was not possible by display on the display unit **104**. The data receiving unit **101** opened by the message sending/receiving unit **111** receives a series of RTP packet data sent by the server, and stores the time stamp, data size and VOP data for each VOP in the receiving buffer **102**.

The decoding unit **103** retrieves the data successively from the receiving buffer **102** in accordance with the time stamps of the VOPs stored in the receiving buffer **102**, decodes the data, and outputs the decoded data to the display unit **104**. At the same time, the decoding unit **103** determines during the decoding of the data whether the data that are being decoded are I-VOPs. If the decoded data are I-VOPs, then the time stamp of the corresponding I-VOP is outputted to the memory management unit **108**. On the other hand, if the decoded data are not I-VOPs, then the time stamp of the corresponding I-VOP is not outputted to the memory management unit **108**. When the memory management unit **108** receives the output of the time stamp from the decoding unit **103,** it detects the entry of the memory **105** for which the active flag is "1", indicating the connection address that is currently being received, and replaces the time stamp of the entry with the time stamp outputted from the decoding unit **103**. Also, the data decoded by the decoding unit **103** are displayed by the display unit **104**, and thus presented to the user.

When the content being received has been reproduced to the end, a signal indicating the fact that the reproduction of the content has terminated is sent from the decoding unit **103** to the memory management unit **108**, and the memory management unit 108 detects the entry in the memory **105** for which the active flag is "1", sets the reproduction termination flag of that entry to "1", and resets the active flag to "0".

The following is an explanation of the operation of the data receiving terminal **12** for the case that the user performs on the user input unit **110** an operation that interrupts the connection to the server while the data are being reproduced. When the user for example presses a button for interrupting the reception/reproduction of data on the user input unit **110,** a signal interrupting the reception/reproduction of data is outputted from the user input unit **110** to the control unit **106.** The control unit **106,** which receives from the user input unit **110** the signal indicating the fact that the sending/receiving of data is interrupted, performs a process halting the reception/reproduction of the data. That is to say, the control unit **106** closes the data receiving unit **101**, resets the receiving buffer **102** and the decoding unit **103**, and resets all active flags of the entries in the memory **105** to "0". It should be noted that in this situation, the time stamp of the I-VOP that has been decoded/reproduced last for the data that were previously reproduced, is recorded by the memory management unit **108.** Also, the control unit **106** commands the message sending/receiving unit **111** to halt the sending of data, and the message sending/receiving unit **111** sends an RTSP TEARDOWN message to the server. This halts the sending of data from the server.

Thus, with the data receiving terminal **12** according to this embodiment, the memory management unit **108** stores the time stamp of data that have been decoded/reproduced last at the time of data reproduction in the memory **105**, so that even if the user terminates the reception at an intermediate position, the data can be received starting with the continuation of the previous reproduction when that content is reproduced again, and the user can change the time and place of long-playing content as convenient, or consume the content partitioned into several parts.

Also, because of the entries stored in the memory **105**, the entry indicating the content of the current connection is marked with an active flag, the memory management unit **108** can detect the entry whose time stamp is to be updated by looking at the active flag when the time stamp is being updated, so that it is possible to improve the speed of the process of updating the time stamp, which also leads to a reduction of the consumed power. Furthermore, because of the entries stored in the memory **105,** the entries indicating the content that has been reproduced to the end are marked with a reproduction termination flag, the connection request creation unit **109** can detect the entries whose reproduction has been terminated to the end by looking at the reproduction termination flags at the time of creating a connection request, so that the speed of creating a connection request can be improved, which also leads to a reduction of the consumed power.

Furthermore, if the decoding unit **103** has decoded intra-coded data (I-VOP), the time stamp of those data is outputted to the memory management unit **108**, so that the number of times that the time stamp is updated by the memory management unit **108** can be reduced, which also leads to a reduction of the consumed power, and if the data are received starting with the continuation of the previously reproduced data, then it is possible to resume the receiving starting with the intra-coded data.

It should be noted that the connection request creation unit **109** of the data receiving terminal **12** of the present embodiment has been explained for the case that a message is displayed asking whether the reproduction should be performed starting with the continuation of the previous reproduction, and the user determines whether the reproduction is continued from an intermediate position, but it is also possible that if an entry for a connection address is registered, and if the reproduction termination flag is "0", then the connection request is created automatically such that the content data are received starting with the continuation of the previous reproduction.

### Second Embodiment

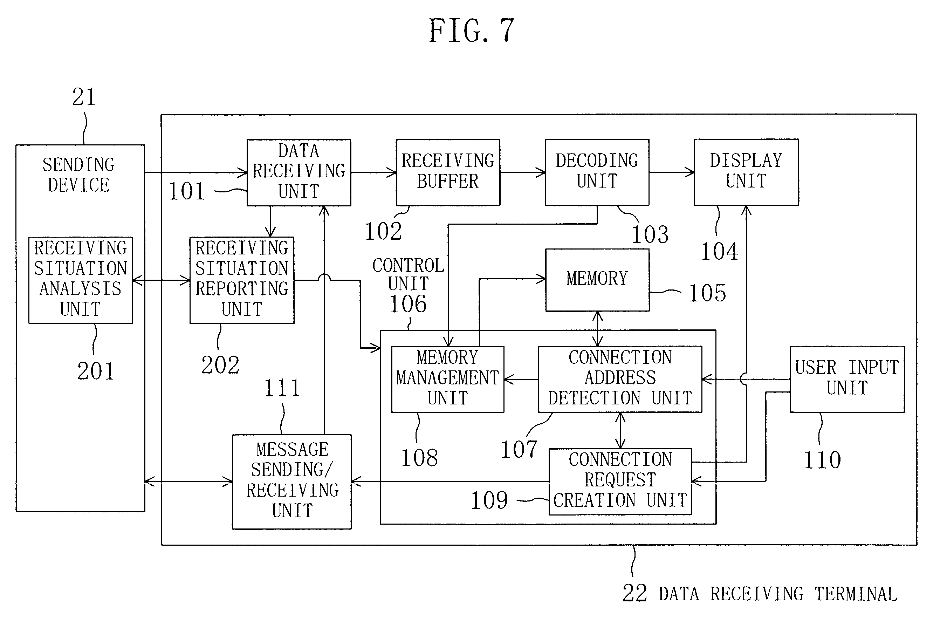

Fig. **7** is a block diagram showing an example of the configuration of a data receiving terminal in accordance with a second embodiment of the present invention. In Fig. **7**, the data receiving terminal **22** in accordance with the present invention receives and reproduces RTP packets that have been sent by RTP/UDP/IP transmission from a sending device (server) **21**. The sending device **21** is provided with a receiving situation analysis unit **201**. Also, the data receiving terminal **22** includes a data receiving unit **101,** a receiving buffer **102,** a decoding unit **103,** a display unit **104,** a memory **105,** a control unit **106,** a user input unit **110,** a message sending/receiving unit **111** and a receiving situation reporting unit **202.** The control unit **106** includes a connection address detection unit **107**, a memory management unit **108** and a connection request creation unit **109.**

The data receiving terminal **22** according to the second embodiment differs from the data receiving terminal **12** as explained in the first embodiment in that it is further provided with a receiving situation reporting unit **202** for reporting the connection situation with the sending device **21**. The structural elements that are the same as in the data receiving terminal **12** according to the first embodiment are marked with the same numerals, and their further explanation has been omitted.

The receiving situation reporting unit **202** of the data receiving terminal **22** operates during connection to the sending device **21**, and regularly sends a reception report to a receiving situation analysis unit **201** of the sending device **21** indicating that the data have been received, and receives a sending report from the receiving situation analysis unit **201** of the sending device **21** indicating that the data have been sent, and if the sending report sent from the sending device **21** is not received at a predetermined time, it is judged that the data receiving terminal **22** has entered a region that is not reached by the radio waves (outside the service area), and this fact is outputted to the control unit **106**. In response, the control unit **106** closes the data receiving unit **101**, resets the receiving buffer **102** and the decoding unit **103**, and resets all active flags of entries in the memory **105** to "0", and displays the fact that the connection has been interrupted on the display unit **104**. It should be noted that at this time, the memory management unit **108** stores in the memory **105** the time stamp of the I-VOP that was decoded/reproduced last when reproducing the previous data.

On the other hand, also the receiving situation analysis unit **201** of the sending device **21** operates similarly when connected to the data receiving terminal **22** and regularly receives the reception report that is sent from the receiving situation reporting unit **202** of the data receiving terminal **22**, and sends out the sending report, and if the reception report sent from the data receiving terminal **22** is not received at a predetermined time, it is judged that the data receiving terminal **22** has entered a region that is not reached by the radio waves (outside the service area), such as a tunnel, and the session is interrupted, which means that the sending device **21** stops to send RTP data.

Thus, with the sending device (server) **21** and the data receiving terminal **22** of this embodiment, communication reports indicating whether connection is established are regularly exchanged between the sending device **21** and the data receiving terminal **22,** so that both can detect when the data receiving terminal **22** has entered a region that is outside the service area, such a tunnel, and the further session can be interrupted, thus achieving that no unnecessary data are sent, communication costs are reduced, and bandwidth is used advantageously. Also, because the memory **105** stores the time stamp of the I-VOP that has been displayed last, the reproduction can be resumed from the point where the connection had been interrupted, and it is not necessary to go again from the beginning through the entire content for which the connection was interrupted, and the content can be consumed efficiently.

It should be noted that this embodiment has been explained for the case that if the receiving situation reporting unit **202** does not receive within a predetermined time the sending report sent by the sending device **21**, it is judged that the data receiving terminal **22** has entered a region outside the service area, but it is also possible that the receiving situation reporting unit **202** monitors the receiving situation of the RTP packets of the data receiving unit **101**, and if the data receiving unit **101** does not receive RTP packets within a predetermined period of time, it is judged that the data receiving terminal **22** has entered a region outside the service area.

Furthermore, if it is judged by the receiving situation analysis unit **201** of the sending device **21** that the data receiving terminal **22** has entered a region outside the service area, it is also possible to store the time stamp of the I-VOP at that time in the sending device **21**. Also in this case, it is possible to resume the reproduction from the position where the connection was interrupted. However, since in this case it has to be estimated to which point the data receiving terminal **22** was actually able to receive the data, the present embodiment is superior with regard to reliability.

Now, the data receiving terminals **12** and **22** according to these embodiments have been explained for the case that the time stamp of the content that is currently being received, which is stored in the memory **105**, is updated when the decoding unit decodes I-VOP data, but it is also possible to update the time stamp of the content that is currently being received, which is stored in the memory **105**, whenever the decoding unit **103** decodes data, regardless of the type of data, or to update the time stamp when a predetermined period of time has passed. Furthermore, there is no limitation to time stamps affecting the order of the decoding, that is DTS (decoding time stamps), and it is also possible to use so-called CTS (composition time stamps) and PTS (presentation time stamps).

The invention may be embodied in other specific forms without departing from the spirit or essential characteristics thereof. The embodiments disclosed in this application are to be considered in all respects as illustrative and not restrictive, the scope of the invention being indicated by the appended claims rather than by the foregoing description. All changes that come within the meaning and range of equivalency of the claims are intended to be embraced therein.

## Claims

1. A method for reproducing a data stream sent from a server via a transmission path to a receiving terminal, the method comprising the steps of:
holding time information regarding a time when a reproduction of the data stream is interrupted; and
resuming the reproduction from an intermediate position of the data stream based on the time information.

2. A data receiving terminal for receiving and reproducing a data stream sent from a server, comprising:
a memory for holding time information regarding a time when a reproduction of the data stream is interrupted; and
means for dispatching a send request to the server such that the reproduction is resumed from an intermediate position of the data stream based on the time information held by the memory.

3. A data receiving terminal for receiving and reproducing data sent from a server, comprising:
data receiving means for receiving data having time stamps indicating reproduction order;
decoding means for decoding data received by the data receiving means in the order of the time stamps, and outputting the time stamps of the decoded data;
display means for displaying the data decoded by the decoding means;
a memory for storing at least connection address and time stamp as a group;
memory management means for managing that the time stamp outputted by the decoding means replaces a time stamp corresponding to the connection address during connection in the memory;
user input means for analyzing an external operation, and outputting at least a connection address;
connection address detection means for detecting whether the connection address outputted by the user input means is stored in the memory;
connection request creation means for creating a connection request requesting the server to send data, based on the connection address outputted from the user input means, the detection result from the connection address detection means, and the connection address and the time stamp stored in the memory; and
message sending/receiving means for sending the connection request created by the connection request creation means to the server, and processing the response from the server.

4. The data receiving terminal according to claim 3, wherein, if the connection address detection means has detected in the memory the connection address indicated by the user input means, the connection request creation means requests the sending of data from a data position indicated by the time stamp corresponding to this connection address.

5. The data receiving terminal according to claim 3,
wherein the user input means further analyzes external operation and outputs a selection signal in response to a message;
wherein, if the connection address detection means has detected in the memory the connection address indicated by the user input means, the connection request creation means displays a message with the display means asking to decide whether to request the sending of data from the time stamp with respect to that connection address, and creates a connection request to the server based on a selection signal with regard to the message outputted from the user input means.

6. The data receiving terminal according to claim 3,
wherein the memory stores as a group at least an active flag indicating whether content is being received, the connection address, and the time stamp; and
wherein, when the time stamp is outputted by the decoding means, the memory management means detects, of the active flags stored in the memory, an active flag indicating that content is being received, and replaces the time stamp corresponding to this active flag indicating that content is being received.

7. The data receiving terminal according to claim 3,
wherein the memory stores as a group at least a reproduction termination flag indicating content that has been reproduced to the end, the connection address, and the time stamp; and
wherein, if the reproduction termination flag with respect to a connection address in the memory outputted from the user input means indicates that reproduction has terminated, then the connection request creation means creates a connection request that requests sending of data from the beginning of that connection address.

8. The data receiving terminal according to claim 3,
wherein every time that intra-coded data is decoded, the decoding means outputs a time stamp of those data to the memory management means.

9. The data receiving terminal according to claim 3,
further comprising a receiving situation reporting means that operates when connected to the server, and that regularly sends receiving reports indicating that data have been received, and receives sending reports sent by the server and indicating that data have been sent;
wherein, if the receiving situation reporting means does not receive a sending report sent by the server within a predetermined time, then it outputs a signal indicating that a region in which data cannot be received has been entered.

10. A data receiving method for receiving and reproducing a data stream sent from a server, the method comprising the steps of:
holding, in a memory, time information regarding a time when a reproduction of the data stream is interrupted; and
dispatching a send request to the server such that the reproduction is resumed from an intermediate position of the data stream based on the time information held by the memory.

11. A data receiving method for receiving and reproducing data sent from a server, the method comprising:
a data receiving step of receiving data having time stamps indicating reproduction order;
a decoding step of decoding received data in the order of the time stamps, and outputting the time stamps of the decoded data;
a display step of displaying the data decoded in the decoding step;
a memory management step of storing in a memory a time stamp outputted in the decoding step, grouped together with at least a connection address;
an external input/output step of analyzing an external operation, and outputting at least a connection address;
a connection address detection step of detecting whether the connection address outputted in the external input/output step is stored in the memory;
a connection request creation step of creating a connection request requesting the server to send data, based on the connection address outputted in the external input/output step, the detection result from the connection address detection step, and the connection address and the time stamp stored in the memory; and
a message sending/receiving step of sending the connection request created by the connection request creation means to the server, and processing the response from the server.
